(19) Europäisches Patentamt
European Patent Office
Office européen des brevets

(11) **EP 2 817 144 B1**

(12) **EUROPEAN PATENT SPECIFICATION**

(45) Date of publication and mention
of the grant of the patent:
**06.04.2016 Bulletin 2016/14**

(51) Int Cl.:
***B32B 5/26*** *(2006.01)*   ***B32B 27/12*** *(2006.01)*
***B32B 27/30*** *(2006.01)*   ***F41H 5/04*** *(2006.01)*

(21) Application number: **13705940.8**

(22) Date of filing: **05.02.2013**

(86) International application number:
**PCT/EP2013/052227**

(87) International publication number:
**WO 2013/124147 (29.08.2013 Gazette 2013/35)**

(54) **COMPOSITE FOR PRODUCING OF AN ANTIBALLISTIC ARTICLE**

VERBUNDSTOFF ZUR HERSTELLUNG EINES KUGELSICHEREN ARTIKELS

COMPOSITE POUR LA PRODUCTION D'UN ARTICLE ANTIBALISTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2012 EP 12156211**

(43) Date of publication of application:
**31.12.2014 Bulletin 2015/01**

(73) Proprietors:
• **Teijin Aramid GmbH**
**42103 Wuppertal (DE)**
• **Kuraray Europe GmbH**
**65926 Frankfurt am Main (DE)**

(72) Inventors:
• **SABEL, Thomas**
**65520 Bad Camberg (DE)**

• **GABRISCH, Hans-Joachim**
**"deceased" (DE)**

(74) Representative: **CPW GmbH**
**Kasinostraße 19-21**
**42103 Wuppertal (DE)**

(56) References cited:
**CA-A1- 2 693 638      DE-A1-102009 037 171**
**GB-A- 567 379        US-A- 5 190 802**
**US-A1- 2009 297 794**

• **DATABASE WPI Week 201202 Thomson Scientific, London, GB; AN 2011-L48862 XP002681399, & KR 2011 0090633 A (AGENCY DEFENSE DEV) 10 August 2011 (2011-08-10)**
• **DATABASE WPI Week 199332 Thomson Scientific, London, GB; AN 1993-253382 XP002681400, & JP 5 171553 A (SEKISUI CHEM IND CO LTD) 9 July 1993 (1993-07-09)**

**Description**

The invention pertains to a composite for producing an antiballistic article, which composite comprises at least two fabric layers and at least one layer of polyvinylbutyral between the at least two fabric layers. The invention pertains also to a method for producing such a composite and an antiballistic article, such as a helmet or a plate obtained from such composite.

Composites for producing antiballistic articles containing an intermediate layer of thermoplastic polymeric material are known in the prior art.

CA 2 693 638 A1 discloses an antiballistic article comprising layers having a thickness of less than 50.8 $\mu$m interspersed with fabric layers comprising high tensile strength fibers. The layers can be laminated by applying heat and pressure.

U.S. 2010/0307629 discloses a method for continuous production of a textile structure resistant to perforation and penetration, wherein an intermediate layer is interposed between an upper and a lower layer and then this assembly is being joined together by hot or cold pressing. The intermediate layer of U.S. 2010/0307629 is made of a polymer selected from the group comprising at least: polyurethane, polyethylene, polypropylene, polyester, styrene butadiene, polycarbonate, phenol or polyvinylbutyral, polyisobutene, polyisobutylene, natural or synthetic rubber, silicon polymer and the like.

The composites of the prior art have the disadvantages that the polymers used for the intermediate layer either need cross-linking at higher temperature and/or are not suitable for long-term storage. In particular, if transportation of the prior at polymers needed for the intermediate layer is required, this transportation has to be performed at low temperatures to avoid undesired early cross-linking. If the intermediate layer contain phenol temperatures during storage and transportation must not exceed - 20 °C. Further, the polymers used for the intermediate layers are not easily to apply homogeneously. These conditions increase the production costs and make the producing process complex. In addition, due to somewhat long cross-linking times the polymers can flow away during the manufacturing process and mold tools and the surrounding area may be polluted. Last but not least, for the prior art intermediate layers solvents are required which renders the composites more expensive and more problematic to handle, i.e. from the environmental point of view.

In US 2009/0297794 a laminate with a base layer and a thin film layer is disclosed. Such a laminate is provided for daily use articles like a raincoat, shoes or an umbrella. The thin film layer is made of polyvinylbutyral and is disposed at the outer side of the article. In none of the embodiments the thin film layer is disposed between two fabric layers. In addition to this the use of high strength fibers is not disclosed in this document.

Document DE 10 2009 037 171 disclosed also an article made of a foil and a panel. The disclosed article is used in the aerospace field. In all embodiments the foil is placed on the outer surface of the panel, in order to prevent the panel for impacts with birds or the like. A displacement of the foil is therefore not desired and useful. In addition to this exhibits the foil a thickness of at least 100 $\mu$m.

Therefore, the object of this invention is to provide a composite that at least reduces the drawbacks of the prior art.

The aim is achieved by a composite for producing of an antiballistic article, the composite comprising at least two fabric layers comprising high tensile strength fibers have a tensile strength of at least 1100 MPa according to ASTM D-885 and at least one layer of polyvinylbutyral between the at least two fabric layers, whereby the layer of polyvinylbutyral is a foil and exhibits a thickness between 30 and 70 $\mu$m even more preferably between 30 and 50 $\mu$m.

Surprisingly, although a very thin polyvinylbutyral layer is applied, the antiballistic performance of the articles obtained from the inventive composite is at least on the same level as those of the prior art. This has advantages in particular for helmets, since the overall weight remains at least at the same level. Moreover, since the polyvinylbutyral is applied as a foil, its handling, storage and application is easy and convenient and no solvent is involved. Furthermore, no phenolic resins and no crosslinker or hardener are necessary for producing the antiballistic article of the invention.

A person skilled in the art is familiar with the production of the polyvinylbutyral by acid-catalyzed acetalation of polyvinyl alcohol with preferentially aliphatic aldehydes, especially n-butyraldehyde and/or acetaldehyde. The polyvinyl butyrals and/or their production process disclosed in EP 0 950 696 (which corresponds to DE 19 816 722 A1) are particularly suitable. In document EP 0 950 696, Example 1 the production of the Polyvinyl butyral is disclosed in the following way:

540 g of polyvinyl alcohol with a degree of polymerization of 360 and a degree of hydrolysis of 88 mol-% are being dissolved in 6600 ml of water. After addition of 269 g of butyraldehyde the reaction is started under dosing of 1090 ml of 20% hydrochloric acid at 0°C. Upon completion of the hydrochloric acid dosing the reaction mixture is warmed up to 30 °C over a period of 3 hours and being held at this temperature for further 2 hours. The precipitated granulate is filtered off and washed with sufficient water. For neutralizing receptively alkalization the suspended product is treated with 10% sodium hydroxide and again slightly warmed-up. Excess base is removed by washing with water. Then the product is dried. The obtained polyvinyl butyral exhibits a residual content of acetate of 13,5% and a residual content of polyvinyl alcohol of 18 mol-%. The viscosity according to Höppner (DIN 53015) is 13,75 mPas in a 10% solution in ethanol and 8,52 mPas in a 10% solution in ethyl acetate.

The term "polyvinylbutyral" refers to any product of acetalation of polyvinyl alcohol with one or more aliphatic aldehydes.

Preferably the polyvinylbutyrals used in this invention have a polyvinyl acetate content of 1 to 20 % by weight, particularly 1 to 10 % by weight and a polyvinyl alcohol content of 10 to 35 % by weight, preferably 11 to 27 % by weight and in particular 16 to 21 % by weight.

The degree of polymerization $P_w$ of the polyvinylbutyrals is preferably between 100 and 1000, particularly preferably between 100 and 800 and in particular between 100 and 500.

Suitable polyvinylbutyrals have a molecular weight sufficiently high to form self supported films either by extrusion or by solvent casting process. The suitable molecular weight is expressed by the viscosity, ranging from 5 mPas to 3000 mPas, preferable between 5 mPas to 2500 mPas and in particular 5 to 2000 mPas, especially 20 to 200 mPas.

Suitable polyvinylbutyral is available on commercial basis for example by the grades Mowital® B 16 H, Mowital® B 75 H or Pioloform BL 16 of Kuraray Europe GmbH.

The Polyvinylbutyral foil (also referred to as "film" in the course of present invention) used in the present invention is manufactured by extrusion for example with a blown film extrusion line, or preferably by a cast extrusion process using a flat film die and chill roll since then the shrinkage values are very low. Processing temperatures for the extrusion line are between 200 and 250 °C, preferably between 240 and 250 °C. The flat film die is heated between 250 and 280 °C, preferably between 260 and 275 °C. Rotations of the extrusion screw and of the melt pump are related to the pressure build-up. Normally the pressure after the melt pump is between 180 and 200 bars. Screw speed of the extrusion line is between 25 and 50 rpm and speed of melt pump between 10 and 25 rpm.

The film thickness is dedicated to the up-take speed of the cast film line and has to be arranged until the needed film thickness is achieved.

Such films or foils are also commercially available as Mowital® BF from Kuraray Europe GmbH with film thickness of 10 to 100 μm.

The PVB foils used in the present invention may contain up to 2 wt% preferable less than 1wt % additives, especially less than 0.5 % wt % additives. In a preferred embodiment the foil is made of "pure" polyvinylbutyral, e.g. contains 0 wt.% of additives.

As additives, inorganic fillers such as pigments, dyes or clays, UV stabilizers, oxidation stabilizers, plasticizer or water may be employed.

Such plasticizers commonly used are aliphatic diesters of tri or tetraethylen glycols, especially triethylenglykol-bis-2-ethylhexanoat (3G8). Also used are dialkyl adipates with aliphatic or cycloaliphatic ester moieties such as dihexyladipate, dialkyl sebacate, triorgano phosphates, triorgano phosphites or phthalate based plasticizer such as benzyl butyl phthalate or the hydrogentated products thereof like diisononylcyclohexyldicarboxylic acid (DINCH).

Suitable UV stabilizer may be amine based, for example tetramethyl piperidine. Next to primary, secondary and tertiary linear amines sterically hindered amines known as 'HALS' products may be employed as co-stabilizer in connection with polynuclear phenolic compounds.

In the content of the invention the term "composite" encompasses so-called "prepregs" which is a term for "pre-impregnated" fibers. These usually take the form of a weave or are uni-directional, but could also be warp knitted or multiaxial fabrics. More generally they are in the form of a fiber network. They already contain the foil used to bond them together and to other components during manufacture. Thus the polyvinylbutyral foil is e.g. laminated to one or to both sides of the fabric layer to result a prepreg. Two or more of these prepregs can be put on top of each other and then be treated by heat and/or pressure.

In one embodiment of the inventive the composite comprises at least two (or more) fabric layers and at least one polyvinylbutyral foil as an intermediate layer between the fabric layers. Thus, the fabric layers are not pre-impregnated by the foil, but rather assembled separately from each other may then be subsequently treated by heat and or pressure.

In one embodiment, of the invention the or at least one of the fabric layers of the composite is a woven fabric layer.

The woven fabric layer has preferably a plain, satin, basket and/or twill weave. If more than one woven fabric layer is used the woven fabric layers have the same or different weaving pattern. It is also possible, that one woven fabric layer has more than one weaving pattern, whereby this woven fabric layer can be used in combination with woven fabric layers with more than one weaving pattern or with one or more woven fabric layers with one weaving pattern. In an embodiment, at least one woven fabric layer is made from a 1680 aramid yarn, having 1000 filaments. The woven fabric has preferably a warp/weft rapport of 2000 and is basket woven (2x2). The warp and weft threads/cm is 127 and the areal density is 410 g/m$^2$. Such a fabric is sold by Teijin Aramid GmbH under the name CT 736. Also other fabrics, such as T750 (3360 dtex) by Teijin Aramid can be used.

In another preferred embodiment the or at least one of the fabric layers is a unidirectional fiber layer. For purposes herein, the term "fiber" is defined as a relatively flexible, macroscopically homogeneous body having a high ratio of length to width across its cross-sectional area perpendicular to its length. The term "fiber" includes also a tape form. The fiber cross section can be any shape, but is typically circular. Herein, the term "filament" is used interchangeably with the term "fiber". The fibers can be any length. The fibers can be continuous filaments, which are filaments that extend typically for a meter or much longer. Filaments are spun in a continuous form frequently as part of a multifilament yarn, wound unto a spool and then cut after the desired amount is placed on the spool. The filaments can be cut into staple fibers having a length of 0.64cm to 12.7cm. The staple fiber can be straight (i.e., non-crimped) or crimped to have a saw tooth shaped crimp along its length, with a crimp (or repeating bend) frequency of 1.4 to 7.1 crimps per cm. The term "yarn" is a generic term for a continuous strand of textile fibers, filaments, or material in a form suitable for knitting, weaving, or otherwise intertwining to form a fabric layer.

In a unidirectional fiber layer all fibers in the layer are arranged in the same direction, whereby the fibers are preferably arranged approximately parallel to each other. The unidirectional fiber layer may have binder threads and/or a binding polyvinylbutyral foil, which connect the unidirectional fibers in one layer. It is also possible that the unidirectional fiber layers may have binder threads, which connect more than one unidirectional fiber layers with each other. If more than one unidirectional fiber layer is used the fibers in each layer can be arranged in an angle to a successor unidirectional fiber layer. This means a first unidirectional fiber layer is arranged in a 0° orientation; the successor unidirectional fiber layer is arranged in an orientation other than 0°, such as in a $\pm$ 45° or 90° orientation. It is also possible that the fibers in successor layers oriented parallel to each other, but with offset to each other.

In one preferred embodiment a plurality of fabric layers are used for the composite, whereby only woven fabric layers, only unidirectional fiber layers or a combination of unidirectional fiber layers and woven fabric layers can be used.

Preferably, at least one fabric layer of the at least two fabric layers comprises aromatic polyamide fibers and/or polyethylene fibers. Especially preferred, the at least one fabric layer comprises poly(p-phenylene-terephthalamid) fibers and/or ultra-high polyethylene tapes. It is also preferred, that the at least one fabric layer comprises a copolymer of aromatic polyamides.

Preferably, a combination of a plurality of aramid woven fabric layers and a plurality of unidirectional fiber layers is used, whereby the unidirectional fiber layers are made of tapes, whereby the tapes are made of ultra-high molecular weight polyethylene. The construction of the unidirectional fiber layers made of such tapes is described in international application PCT/NL2006/000179 and in EP 1 908 586, which contents are inserted by reference. Document EP 1 908 586 discloses:

Process for producing a laminate being built of at least two monolayers of polymeric tapes,

the polymeric tapes having a tensile strength of at least 200 MPa,

said process comprises the steps of

- forming a first monolayer of polymeric tapes by pre-tensioning the polymeric tapes and subsequently positioning the polymeric tapes under tension in a unidirectional, parallel manner,

- forming at least a second monolayer over the first monolayer in the same manner the first monolayer is formed, thereby

- stacking the at least two monolayers of polymeric tapes in such a way that the direction of the polymeric tapes is the same in every monolayer and that the polymeric tapes of each monolayer are offset to the tapes of the adjoining monolayer above or below that monolayer

- consolidating the thus stacked monolayers of polymeric tapes to obtain a laminate.

It is preferred that the polyvinylbutyral foil is applied between two successive fabric layers in the antiballistic article. Preferably, the foil is applied on the main extension area of the fabric layer. In a preferred embodiment the antiballistic article is built up by a first fabric layer, a foil on the first fabric layer and a second fabric layer on top of the foil of the first fabric layer, whereby further fabric layers with foils can follow.

The foils can be laid between the fabric layers or fixed to the layer, e.g. by laminating.

The invention is also directed to a composite for producing of an antiballistic article, the composite comprising at least one fabric layer, comprising high tensile strength fibers have a tensile strength of at least 1100 MPa according to ASTM D-885 and at least one layer of polyvinylbutyral, whereby the layer of polyvinylbutyral is a foil and exhibits a thickness between 30 and 70 $\mu$m.

All preferred embodiments for the composite comprising at least two fabric layers are also suitable and preferred for the composite comprising at least one layer. Especially the amount of additives, woven or unidirectional layer as fabric layer, fabric layer is pre-impregnated with the foil on one or both sides, and the kind of fibers for the fabric layer, is preferably like the description for the composite comprising two fabric layers.

The present invention is also directed to a method for producing a composite, suitable for producing antiballistic articles, comprising the following steps:

i) providing a first fabric layer; comprising high tensile strength fibers have a tensile strength of at least 1100 MPa according to ASTM D-885;

ii) arranging a layer of polyvinylbutyral on top of the first fabric layer;

iii) arranging a second fabric layer comprising high tensile strength fibers have a tensile strength of at least 1100 MPa according to ASTM D-885; on top of the layer of polyvinylbutyral;

iv) optionally repeating steps ii) and iii) with further fabric layers (with or without high strength fibers) and layers of polyvinylbutyral,

wherein the layer of polyvinylbutyral is a foil that exhibits a thickness between 30 and 70 $\mu$m, more preferably between 30 and 50 $\mu$m.

Furthermore, a method for producing a composite, suitable for producing antiballistic articles is claimed, comprising the following steps:

i) providing a first fabric layer comprising high tensile strength fibers have a tensile strength of at least 1100 MPa according to ASTM D-885;, pre-impregnated with (a) layer(s) of polyvinylbutyral on one or both side(s) of the first fabric layer;

ii) optionally arranging (a) further fabric layers comprising high tensile strength fibers have a tensile strength of at least 1100 MPa according to ASTM D-885;, optionally pre-impregnated with (a) layer(s) of polyvinylbutyral on one or both side(s), on top of the first fabric layer,

wherein the layer of polyvinylbutyral is a foil that exhibits a thickness 30 and 70 $\mu$m, more preferably between 30 and 50 $\mu$m.

Preferably, the composite is further treated by temperature and pressure, such as by calendaring, to melt the foil of polyvinylbutyral.

The composite made by this method is characterized in that at least one of its fabric layers comprises aromatic polyamide fibers and/or polyethylene fibers as described above.

The invention also pertains to an antiballistic article, such as a helmet or a plate, obtained from a composite as described above.

The plate can be used in the soft-ballistic or in the hard-ballistic.

If the antiballistic article is a helmet, the helmet preferably may comprise a layer made of aramid and a further layer made of the same or a different suitable polymer, such as polyethylene. In such a case, the aramid part and/or the polyethylene part is/are made of the fabric layers, whereby at least one, preferably a plurality of fabric layers forms the part. The aramid part contains preferably fabric layers made of poly(para-phenylene-terephthalamid) fibers and the polyethylene part contains preferably tape layers made of ultra-high molecular polyethylene. In a preferred embodiment the helmet comprises (starting from the head of a user) a first part made of aramid woven fabric layers, a second part made of ultra-high molecular polyethylene tapes and a third part made of aramid woven layers, whereby all three parts are connected with each other to one single shell. This means, the polyethylene part is sandwiched between two aramid parts.

If the melting point of the polyethylene layer allows then the connection between the layers can be achieved by simply melting the polyvinylbutyral foil. In a preferred embodiment the polyvinylbutyral foil described above is arranged between the aramid part and the polyethylene part. In a further preferred embodiment the polyvinylbutyral foil described above is applied between the fabric layers, which forms the aramid part and between the aramid parts themselves. In a preferred embodiment the polyethylene part is free of the described polyvinylbutyral foil and only the aramid parts comprise the polyvinylbutyral foil.

The polyvinylbutyral foil allows a film production without any solvents, thus no emissions. No remaining phenolic and formaldehyde components are left in the foil and the respective composite. Storage of the film is cheap compared to the standard system comprising phenol. The polyvinylbutyral composite allows simple, cost effective transportation conditions and virtually unlimited storability at room temperature.

The invention is further elucidated by means of the following examples.

a) Determination of the polyvinyl acetate content

The polyvinyl acetate content should be understood to mean the proportion, in % by weight, of acetyl groups which results from the consumption of the potassium hydroxide solution necessary for the saponification of 1 g of substance.

Method of determination (on the basis of EN ISO 3681):

Approximately 2g of the substance to be investigated are weighed accurately to 1 mg into a 500 ml round bottomed flask and dissolved in 90 ml of ethanol and 10 ml of benzyl alcohol under reflux. After cooling, the solution is neutralized with 0.01 N NaOH against phenolphthalein. Subsequently, 25.0 ml of 0.1 N KOH are added and heating under reflux is carried out for 1.5 hours. The flask is allowed to cool in the closed state and the excess liquor is titrated with 0.1 N hydrochloric acid against phenolphthalein as indicator until a permanent discoloration is obtained. A blank is treated in the same way. The PV acetate content is calculated as follows: PV acetate content in [%] = (b-a)*86/E, with a = consumption of 0.1 N KOH for the sample in ml, b = consumption of 0.1 N KOH for the blank test in ml and E = amount of the substance to be examined weighed in in the dry state in g.

b) Determination of the content of polyvinyl alcohol groups

The content of polyvinyl alcohol groups (polyvinyl alcohol content) is the proportion of hydroxyl groups which is detectable by the subsequent acetylation with acetic anhydride.

Method of determination (on the basis of DIN 53240):

Approximately 1 g of Mowital® is weighed accurately to 1 mg into a 300 ml ground Erlenmeyer flask, 10.0 ml of acetic anhydride pyridine mixture (23:77 v/v) are added and this is heated for 15-20 hours to 50°C. After cooling, 17 ml of 1,2-dichloroethane are added and rotated briefly. Subsequently, 8 ml of water are added with stirring, the flask is closed with a stopper and stirring is carried out for 10 minutes. The neck of the flask and the stopper are rinsed with 50 ml of demineralized water, covered with 5 ml of n-butanol and the free acetic acid is titrated with 1 N caustic soda solution against phenolphthalein. A blank specimen is treated in the same way. The polyvinyl alcohol content is calculated as follows: polyvinyl alcohol content [%] = (b-a)*440/E with a = consumption of 1 N NaOH for the sample in ml, b = consumption of 1 N NaOH for the blank sample in ml and E = amount of the substance to be examined weighed in in the dry state in g.

c) Determination of the viscosity

The viscosity of the polyvinyl acetals used is determined according to DIN 53015 on a 10 wt.% solution in ethanol comprising 5 wt.-% of water at 20°C in the Hoeppler viscosimeter.

d) Determination of the degree of polymerization $P_w$

The degree of polymerization $P_w$ can be determined more easily on polyvinyl alcohols and does not change during acetalisation. Using polyvinyl butyral as an example, the degree of polymerization $P_w$ is calculated according to the following formula:

$$\overline{P_w} = \frac{\overline{M_w}}{\left(86 - 0{,}42 \cdot DH\right)}$$

$M_w$ is carried out by gel permeation chromatography (GPC) on re-acetylated samples combined with static light scattering (absolute method). The accuracy of the values for $M_w$ was determined as being +15%.

The degree of hydrolysis (DH [mole%]) is calculated according to the following formula:

$$DH = \frac{100 - 0{,}1535 \cdot EV}{100 - 0{,}0749 \cdot EV} \cdot 100$$

The ester value (EV) is determined as follows and using the following formula:

$$EV = \frac{(a - b) \cdot 5{,}61}{E}$$

With a = consumption of 0.1 N KOH [ml], b = consumption of 0.1 N KOH [ml] for the blank samples, E = accurate amount of polyvinyl alcohol weight in.

Approximately 1 g of the polyvinyl alcohol is introduced into a 250 ml round bottomed flask and 70 ml of distilled water and 30 ml of neutralized alcohol are added and heated under reflux until the polyvinyl alcohol has dissolved completely. After cooling, titration is carried out with 0.1 N KOH against phenolphthalein up to neutrality. When neutralization has been completed, 50 ml of 0.1 N KOH are added and this mixture is heated under reflux for one hour. The excess of the liquor is back-titrated with 0.1 N HCl in the heat against phenolphthalein as indicator until the color of the solution no longer returns. Simultaneously, the test is carried out with a blank sample.

## Example

The example relates to a helmet obtained from a composite described above.

The helmet shell comprises 18 aramid woven fabric layers. A polyvinylbutyral film LP BF7-50 obtained from Kuraray Europe GmbH with a thickness of 50 $\mu$m is arranged between adjacent aramid layers. For comparison a similar helmet is produced, wherein the aramid layers are connected by phenolic polyvinylbutyral resin instead. The helmets are produced in one single molding step.

LP BF7-50 consists of polyvinyl butyral having a polyvinyl alcohol content of 18 to 21 wt.-%, a polyvinyl acetate content of 1 to 2 wt.-% and has a viscosity of 60 - 100 mPas. The film does not comprise any additive.

The helmet shell had a weight of 1086 g.

The ballistic performance, i.e. v50 value and trauma values, of the helmets are tested according to "Technische Lieferbedingung Gefechtshelm TL8470 - 0008 dated 03.12.03" of German Bundeswehr with a 1.1 g Fragment Simulating Projectile (FSP).

It turned out that the v50 value measured on a helmet comprising the composite according to the invention is higher (680 m/s) than that of a helmet obtained with material of the prior art. The inventive helmet also showed considerably lower trauma values, which are approximately 10 mm lower (with 9 mm DM41 ammunition) than those obtained with helmets of the prior art.

## Claims

1.   Composite for producing of an antiballistic article, the composite comprising at least two fabric layers, comprising high tensile strength fibers have a tensile strength of at least 1100 MPa according to ASTM D-885 and at least one layer of polyvinylbutyral between the at least two fabric layers, whereby the layer of polyvinylbutyral is a foil and exhibits a thickness between 30 and 70 μm.

2. The composite of claim 1, **characterized in that** the foil of polyvinylbutyral exhibits a thickness between 30 and 50 μm.

3. The composite of claim 1 or 2, **characterized in that** the foil of polyvinylbutyral comprises less than 2 wt.-% of additives.

4. The composite of any of the preceding claims, **characterized in that** at least one fabric layer is a woven fabric layer.

5. The composite of any of the preceding claims 1 to 3, **characterized in that** at least one fabric layer is a unidirectional fiber layer.

6. The composite of any of the preceding claims 1 to 5, **characterized in that** at least one fabric layer is pre-impregnated with the foil of polyvinylbutyral on one or both sides.

7. The composite of any of the preceding claims, **characterized in that** at least one fabric layer comprises aromatic polyamide fibers and/or polyethylene fibers.

8. Method for producing a composite, suitable for producing antiballistic articles, comprising the following steps:

   i) providing a first fabric layer comprising high tensile strength fibers, have a tensile strength of at least 1100 MPa according to ASTM D-885;
   ii) arranging a layer of polyvinylbutyral on top of the first fabric layer;
   iii) arranging a second fabric layer comprising high tensile strength fibers have a tensile strength of at least 1100 MPa according to ASTM D-885 on top of the layer of polyvinylbutyral;
   iv) optionally repeating steps ii) and iii) with further fabric layers and layers of polyvinylbutyral,

   **characterized in that** the layer of polyvinylbutyral is a foil that exhibits a thickness between 30 and 70 μm.

9. Method for producing a composite, suitable for producing antiballistic articles, comprising the following steps:

   i) providing a first fabric layer comprising high tensile strength fibers, have a tensile strength of at least 1100 MPa according to ASTM D-885, pre-impregnated with (a) layer(s) of polyvinylbutyral on one or both side(s) of the first fabric layer;
ii) arranging (a) further fabric layers comprising high tensile strength fibers have a tensile strength of at least 1100 MPa according to ASTM D-885, optionally pre- impregnated with (a) layer(s) of polyvinylbutyral on one or both side(s), on top of the first fabric layer,

**characterized in that** the layer of polyvinylbutyral is a foil that exhibits a thickness between 30 and 70 μm, more preferably between 30 and 50 μm

10. The method of claim 8 or 9, **characterized in that** the composite is further treated by temperature and pressure, such as by calendaring, to melt the foil of polyvinylbutyral.

11. The method of claims 8 to 9, **characterized in that** the foil of polyvinylbutyral comprises less than 2 wt.-% of additives.

12. The method of claims 8 to 11, **characterized in that** at least one of the fabric layers comprises aromatic polyamide fibers and/or polyethylene fibers.

13. Antiballistic article, such as a helmet or a plate, obtained from a composite according to any of the preceding claims.

**Patentansprüche**

1. Verbundstoff zur Herstellung eines antiballistischen Artikels, wobei der Verbundstoff mindestens zwei Lagen aus Flächengebilden, die hochzugfeste Fasern mit einer Zugfestigkeit von mindestens 1100 MPa nach ASTM D-885 umfassen, und mindestens eine Lage aus Polyvinylbutyral zwischen den mindestens zwei Lagen aus Flächengebilden umfasst, wobei die Lage aus Polyvinylbutyral eine Folie ist und eine Dicke zwischen 30 und 70 μm aufweist.

2. Verbundstoff nach Anspruch 1, **dadurch gekennzeichnet, dass** die Folie aus Polyvinylbutyral eine Dicke zwischen 30 und 50 μm aufweist.

3. Verbundstoff nach Anspruch 1 oder 2, **dadurch gekennzeichnet, dass** die Folie aus Polyvinylbutyral weniger als 2 Gew.-% Zusatzstoffe umfasst.

4. Verbundstoff nach einem der vorhergehenden Ansprüche, **dadurch gekennzeichnet, dass** mindestens eine Lage aus Flächengebilden eine Gewebelage ist.

5. Verbundstoff nach einem der vorhergehenden Ansprüche 1 bis 3, **dadurch gekennzeichnet, dass** mindestens eine Lage aus Flächengebilden eine Lage aus unidirektionalen Fasern ist.

6. Verbundstoff nach einem der vorhergehenden Ansprüche 1 bis 5, **dadurch gekennzeichnet, dass** mindestens eine Lage aus Flächengebilden bereits mit der Folie aus Polyvinylbutyral auf einer oder beiden Seiten versehen ist.

7. Verbundstoff nach einem der vorhergehenden Ansprüche, **dadurch gekennzeichnet, dass** mindestens eine Lage aus Flächengebilden Polyaramidfasern und/oder Polyethylenfasern umfasst.

8. Verfahren zur Herstellung eines für die Herstellung von antiballistischen Artikeln geeigneten Verbundstoffs, das die folgenden Schritte umfasst:

i) Bereitstellen einer ersten Lage aus Flächengebilden, umfassend hochzugfeste Fasern mit einer Zugfestigkeit von mindestens 1100 MPa nach ASTM D-885;
ii) Anordnen einer Lage aus Polyvinylbutyral oben auf der ersten Lage aus Flächengebilden;
iii) Anordnen einer zweiten Lage aus Flächengebilden, umfassend hochzugfeste Fasern mit einer Zugfestigkeit von mindestens 1100 MPa nach ASTM D-885 oben auf der Lage aus Polyvinylbutyral;
iv) optional Wiederholen von Schritt ii) und iii) mit weiteren Lagen aus Flächengebilden und Lagen aus Polyvinylbutyral,

**dadurch gekennzeichnet, dass** die Lage aus Polyvinylbutyral eine Folie mit eine Dicke zwischen 30 und 70 μm ist.

9. Verfahren zur Herstellung eines für die Herstellung von antiballistischen Artikeln geeigneten Verbundstoffs, das die folgenden Schritte umfasst:

i) Bereitstellen einer ersten Lage aus Flächengebilden, umfassend hochzugfeste Fasern mit einer Zugfestigkeit von mindestens 1100 MPa nach ASTM D-885, die bereits mit (einer) Lage(n) aus Polyvinylbutyral auf einer oder beiden Seite(n) der ersten Lage aus Flächengebilden versehen ist;
ii) Anordnen (einer weiteren) weiterer Lage(n) aus Flächengebilden, umfassend hochzugfeste Fasern mit einer Zugfestigkeit von mindestens 1100 MPa nach ASTM D-885, die optional bereits mit (einer) Lage(n) aus Polyvinylbutyral auf einer oder beiden Seite(n) versehen ist bzw. sind, oben auf der ersten Lage aus Flächengebilden,

**dadurch gekennzeichnet, dass** die Lage aus Polyvinylbutyral eine Folie mit einer Dicke zwischen 30 und 70 μm, besonders bevorzugt zwischen 30 und 50 μm ist.

10. Verfahren nach Anspruch 8 oder 9, **dadurch gekennzeichnet, dass** der Verbundstoff ferner temperatur- und druckbehandelt wird, beispielsweise durch Kalandrieren, damit die Folie aus Polyvinylbutyral schmilzt.

11. Verfahren nach Anspruch 8 bis 9, **dadurch gekennzeichnet, dass** die Folie aus Polyvinylbutyral weniger als 2 Gew.-% Zusatzstoffe umfasst.

12. Verfahren nach Anspruch 8 bis 11, **dadurch gekennzeichnet, dass** mindestens eine der Lagen aus Flächengebilden Polyaramidfasern und/oder Polyethylenfasern umfasst.

13. Antiballistischer Artikel, beispielsweise ein Helm oder eine Platte, der aus einem Verbundstoff nach einem der vorhergehenden Ansprüche erhalten wird.

**Revendications**

1. Matériau composite pour la fabrication d'un article antibalistique, le matériau composite comportant au moins deux couches de tissu, comprenant des fibres à haute résistance à la traction dont la résistance à la traction est d'au moins 1100 MPa conformément à ASTM D-885, et au moins une couche de poly(vinylbutyral) entre les au moins deux couches de tissu, la couche de poly(vinylbutyral) étant un film et présentant une épaisseur de 30 à 70 μm. .

2. Matériau composite selon la revendication 1, **caractérisé en ce que** le film de poly(vinylbutyral) présente une épaisseur de 30 à 50 μm.

3. Matériau composite selon la revendication 1 ou 2, **caractérisé en ce que** le film de poly(vinylbutyral) contient moins de 2 % en poids d'additifs.

4. Matériau composite selon l'une quelconque des revendications précédentes, **caractérisé en ce qu'**au moins une couche de tissu est une couche de tissu tissé.

5. Matériau composite selon l'une quelconque des revendications 1 à 3, **caractérisé en ce qu'**au moins une couche de tissu est une couche de fibres unidirectionnelles.

6. Matériau composite selon l'une quelconque des revendications 1 à 5, **caractérisé en ce qu'**au moins une couche de tissu est pré-imprégnée sur une seule face ou sur les deux faces avec le film de poly(vinylbutyral).

7.  Matériau composite selon l'une quelconque des revendications précédentes, **caractérisé en ce qu'**au moins une couche de tissu comprend des fibres de polyamide aromatique et/ou des fibres de polyéthylène.

8.  Procédé pour produire un matériau composite pouvant servir à fabriquer des articles antibalistiques, comportant les étapes suivantes :

    i) fourniture d'une première couche de tissu comprenant des fibres à haute résistance à la traction dont la résistance à la traction est d'au moins 1100 MPa conformément à ASTM D-885 ;
    ii) disposition d'une couche de poly(vinylbutyral) par-dessus la première couche de tissu ;
    iii) disposition, par-dessus la couche de poly(vinylbutyral), d'une deuxième couche de tissu comprenant des fibres à haute résistance à la traction dont la résistance à la traction est d'au moins 1100 MPa conformément à ASTM D-885 ;
    iv) éventuellement, répétition des étapes ii) et iii) avec d'autres couches de tissus et d'autres couches de poly(vinylbutyral),

    **caractérisé en ce que** la couche de poly(vinylbutyral) est un film qui présente une épaisseur de 30 à 70 μm.

9.  Procédé pour produire un matériau composite pouvant servir à fabriquer des articles antibalistiques, comportant les étapes suivantes :

    i) fourniture d'une première couche de tissu comprenant des fibres à haute résistance à la traction dont la résistance à la traction est d'au moins 1100 MPa conformément à ASTM D-885, pré-imprégnée avec une/des couche(s) de poly(vinylbutyral) sur une seule face ou sur les deux faces de la première couche de tissu ;
    ii) disposition, par-dessus la première couche de tissu, d'autres couches de tissu comprenant des fibres à haute résistance à la traction dont la résistance à la traction est d'au moins 1100 MPa conformément à ASTM D-885, pré-imprégnées avec une/des couche(s) de poly(vinylbutyral) sur une seule face ou sur les deux faces, **caractérisé en ce que** la couche de poly(vinylbutyral) est un film qui présente une épaisseur de 30 à 70 μm, de préférence de 30 à 50 μm

10. Procédé selon la revendication 8 ou 9, **caractérisé en ce que** le matériau composite est en outre traité par application de chaleur et de pression, notamment par calandrage, pour faire fondre le film de poly(vinylbutyral).

11. Procédé selon les revendications 8 et 9, **caractérisé en ce que** le film de poly(vinylbutyral) contient moins de 2 % en poids d'additifs.

12. Procédé selon les revendications 8 à 11, **caractérisé en ce qu'**au moins une des couches de tissu comprend des fibres de polyamide aromatique et/ou des fibres de polyéthylène.

13. Article antibalistique, tel qu'un casque ou une plaque, réalisé à l'aide d'un matériau composite selon l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2693638 A1
- US 20100307629 A
- US 20090297794 A
- DE 102009037171
- EP 0950696 A
- DE 19816722 A1
- NL 2006000179 W
- EP 1908586 A